# EUROPEAN PATENT APPLICATION

(11) **EP 4 407 546 A1**
(43) Date of publication of application: **31.07.2024**
(21) Application number: 22872444.9
(22) Date of filing: 20.04.2022
(51) Int. Cl.: G06Q 20/20, G07G 1/12

(54) **SERVER DEVICE AND PROGRAM**

(30) Priority: 24.09.2021 JP 2021155825
(71) Applicant: Toshiba TEC Kabushiki Kaisha, Tokyo 141-8562 (JP)
(72) Inventor: SAKURAI, Kenji, Tokyo 141-8562 (JP); NAMBU, Kazuya, Tokyo 141-8562 (JP)
(74) Representative: Bandpay & Greuter
(86) International application number: PCT/JP2022/018249
(87) International publication number: WO 2023/047685

(57) **Abstract**

A server device of an embodiment includes: a return information acquisition unit that acquires transaction specifying information on a transaction in which a product has been returned after settlement processing and return information indicating the product that has been returned regarding the transaction; a return receipt information registration unit that registers return receipt information indicating information on the product that has been returned based on return information acquired by the return information acquisition unit; a corrected receipt information registration unit that registers corrected receipt information obtained by correcting receipt information indicating information on the transaction before the product has been returned based on the transaction specifying information and the return information acquired by the return information acquisition unit; and an output unit that outputs the corrected receipt information and request information to an information terminal of a customer in association with each other, the request information being information for transmitting a request for the return receipt information.

## Description

### FIELD

An embodiment of the present invention relates to a server device and a program.

### BACKGROUND

Electronic receipts obtained by computerizing receipts received by customers who have purchased products and service (hereinafter, collectively referred to as "products") have been used. The electronic receipts are transmitted from an electronic receipt server that manages receipt information to information terminals of customers, for example.

By the way, in a transaction, a customer returns a product that the customer has purchased once in some cases. In a case where a product is returned, a corrected receipt and a return receipt are issued generally in processing of a point of sales (POS) terminal. The corrected receipt is obtained by correcting a receipt issued at the time of purchase, and indicates that a product has been returned. Information on the returned product (e.g., name and refund amount) is described in the return receipt.

There has been proposed a device that issues the corrected receipt and the return receipt in a mechanism for issuing the above-described electronic receipt (e.g., Patent Literature 1).

A conventional electronic receipt server, however, separately transmits corrected receipt information and return receipt information to an information terminal of a customer. The information terminal of the customer displays a corrected receipt and a return receipt by independent operations. For this reason, it cannot be said that good operability of the information terminal of the customer is provided.

### SUMMARY OF THE INVENTION

### Problem to be Solved by the Invention

A problem to be solved by the present invention is to provide a server device and a program capable of improving operability of an information terminal of a customer in display of a return receipt.

### Means for Solving Problem

A server device of an embodiment comprising: a return information acquisition unit that acquires transaction specifying information on a transaction in which a product has been returned after settlement processing and return information indicating the product that has been returned regarding the transaction; a return receipt information registration unit that registers return receipt information indicating information on the product that has been returned based on return information acquired by the return information acquisition unit; a corrected receipt information registration unit that registers corrected receipt information obtained by correcting receipt information indicating information on the transaction before the product has been returned based on the transaction specifying information and the return information acquired by the return information acquisition unit; and an output unit that outputs the corrected receipt information and request information to an information terminal of a customer in association with each other, the request information being information for transmitting a request for the return receipt information.

### BRIEF DESCRIPTION OF DRAWINGS

FIG. 1 schematically illustrates an electronic receipt system including an electronic receipt server of an embodiment.
FIG. 2 is a block diagram illustrating a hardware configuration of the electronic receipt server of the embodiment.
FIG. 3 illustrates a data configuration of a member master stored in a memory unit of the electronic receipt server of the embodiment.
FIG. 4 illustrates a data configuration of a receipt information management file stored in the memory unit of the electronic receipt server of the embodiment.
FIG. 5 illustrates a data configuration of a return receipt information management file stored in the memory unit of the electronic receipt server of the embodiment.
FIG. 6 is a block diagram illustrating a functional configuration of a control unit of the electronic receipt server of the embodiment.
FIG. 7 is a block diagram illustrating a hardware configuration of a customer terminal of the embodiment.
FIG. 8 is a block diagram illustrating a functional configuration of a control unit of a customer terminal of the embodiment.
FIG. 9 is a sequence chart illustrating a flow of the operation of the electronic receipt system of the embodiment.
FIG. 10 illustrates a display screen of a receipt in the customer terminal of the embodiment.
FIG. 11 illustrates a display screen of a corrected receipt in the customer terminal of the embodiment.
FIG. 12 illustrates a display screen of a return receipt in the customer terminal of the embodiment.
FIG. 13 is a flowchart illustrating a flow of registration processing performed by the control unit of the electronic receipt server of the embodiment.
FIG. 14 is a flowchart illustrating a flow of output processing performed by the control unit of the electronic receipt server of the embodiment.

### DETAILED DESCRIPTION

A server device and a program of an embodiment will be described below with reference to the drawings. Note that the present invention is not limited by the embodiment to be described below. For example, although, in the embodiment to be described below, an example in which a mobile terminal is used as an information terminal of a customer will be described, a stationary personal computer (PC) and the like may be used.

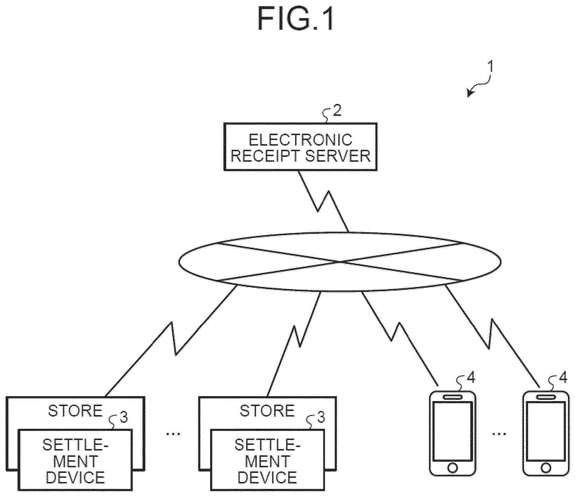

FIG. 1 schematically illustrates an electronic receipt system 1. The electronic receipt system 1 of the embodiment is constructed across a business operator that provides electronic receipt service, a store and a company (hereinafter, collectively referred to as "stores") that issue electronic receipts, and a customer who uses the electronic receipt service.

The electronic receipt system 1 includes an electronic receipt server 2, a settlement device 3, and a customer terminal 4. The electronic receipt server 2 is managed by the business operator that operates the electronic receipt service. The settlement device 3 is provided in a store. The customer terminal 4 includes a smartphone owned by a customer who uses the electronic receipt service. Note that, although FIG. 1 illustrates only one settlement device provided in each store, each store may include a plurality of settlement devices. Here, the electronic receipt server 2 is one example of a server device, and the customer terminal 4 is one example of an information terminal of a customer. Note that the server device may include a plurality of computers.

The electronic receipt server 2 is communicably connected to the settlement device 3 and the customer terminal 4 via a network such as the Internet. The electronic receipt server 2 may be connected to the settlement device 3 of each store via, for example, a headquarters server of a company that operates a store in which the settlement device 3 is installed.

When a customer purchases a product in a store, receipt information related to the purchase of the product is transmitted from the settlement device 3 of the store to the electronic receipt server 2. The electronic receipt server 2 transmits the receipt information to the customer terminal 4 at predetermined timing or in response to a request from the customer terminal 4. The customer can browse the receipt information received from the electronic receipt server 2 through the customer terminal 4. This enables reduction of paper receipts issued by the settlement device 3.

When a product is returned in the store, the settlement device 3 transmits transaction specifying information and return information to the electronic receipt server 2. The transaction specifying information is used for specifying a transaction in which the product has been returned after settlement processing. The return information indicates the returned product. The electronic receipt server 2 registers return receipt information based on the return information. Furthermore, the electronic receipt server 2 registers corrected receipt information based on the transaction specifying information and the return information. For example, the electronic receipt server 2, which manages receipt information after settlement, extracts receipt information after settlement specified by the received transaction specifying information, and updates the extracted receipt information based on the received return information.

Then, the electronic receipt server 2 transmits the corrected receipt information and request information to the customer terminal 4 in association with each other. The request information is used for the customer terminal 4 to transmit a return receipt information request to the electronic receipt server 2, and includes, for example, link information of a web page that provides the return receipt information. In one example, the electronic receipt server 2 transmits, to the customer terminal 4, display data for displaying a corrected receipt in which the link information of a web page that provides the return receipt information is embedded. The customer terminal 4 can easily display a link for displaying a return receipt on a display screen of the corrected receipt by the electronic receipt server 2 transmitting, to the customer terminal 4, such information in which the corrected receipt information and the request information are associated with each other. This improves operability for a customer to display a return receipt in the customer terminal 4. Note that the electronic receipt server 2 may transmit, for example, text data in which the corrected receipt information and the request information are associated with each other, instead of the display data. In this case, a mobile terminal 4 generates the display data based on the received text data and the like.

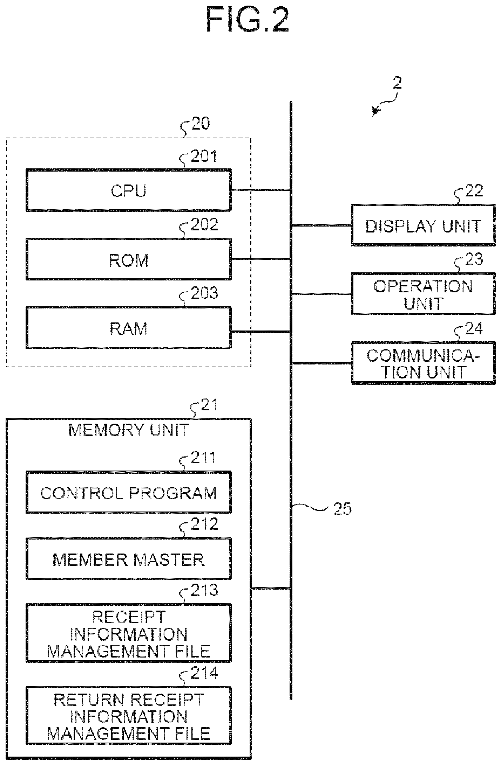

Next, the electronic receipt server 2 will be described in detail. The electronic receipt server 2 also functions as a web server, and provides an electronic receipt to a customer who is a member of the electronic receipt service. Specifically, the electronic receipt server 2 manages receipt information of a transaction settled by the settlement device 3 for each transaction. Then, the electronic receipt server 2 publishes receipt information on a web page, and appropriately transmits the receipt information to the customer terminal 4 in response to a request from the customer terminal 4. Here, a data format of the receipt information transmitted by the electronic receipt server 2 is not limited. The receipt information is a concept including display data generated based on data stored in a memory unit 21 (see FIG. 2) of the electronic receipt server 2 in order to display an electronic receipt on the customer terminal 4. The same applies to the corrected receipt information and the return receipt information.

Furthermore, when a product is returned, the electronic receipt server 2 provides an electronic corrected receipt (hereinafter simply referred to as "corrected receipt") and an electronic return receipt (hereinafter simply referred to as "return receipt") to a customer. The corrected receipt is obtained by correcting a receipt indicating the content of a transaction before the product is returned. The return receipt indicates the content regarding the returned product. Specifically, the electronic receipt server 2 publishes the corrected receipt information and the return receipt information, which are display data, on the web page, and appropriately transmits the corrected receipt information and the return receipt information to the customer terminal 4 in response to a request from the customer terminal 4.

FIG. 2 is a block diagram illustrating a main hardware configuration of the electronic receipt server 2. The electronic receipt server 2 includes a control unit 20, the memory unit 21, a display unit 22, an operation unit 23, and a communication unit 24. The control unit 20, the memory unit 21, the display unit 22, the operation unit 23, and the communication unit 24 are connected to each other via a bus 25 or the like.

The control unit 20 is configured by a computer including a central processing unit (CPU) 201, a read only memory (ROM) 202, and a random access memory (RAM) 203. The CPU 201, the ROM 202, and the RAM 203 are connected to each other via the bus 25.

The CPU 201 controls the entire operation of the electronic receipt server 2. The ROM 202 stores various programs such as a program used for driving the CPU 201 and various pieces of data. The RAM 203 is used as a work area of the CPU 201, and develops various programs and various pieces of data stored in the ROM 202 and the memory unit 21. The control unit 20 executes various pieces of control processing of the electronic receipt server 2 by the CPU 201 operating in accordance with a control program, which is stored in the ROM 202 or the memory unit 21 and developed in the RAM 203.

The memory unit 21 includes a storage medium such as a hard disk drive (HDD) and a flash memory, and maintains stored contents even when power is turned off. The memory unit 21 stores a control program 211, a member master 212, a receipt information management file 213, and a return receipt information management file 214.

The control program 211 includes a program for receiving receipt information from the settlement device 3, a program for managing the received receipt information for each transaction, and a program for implementing a web server function.

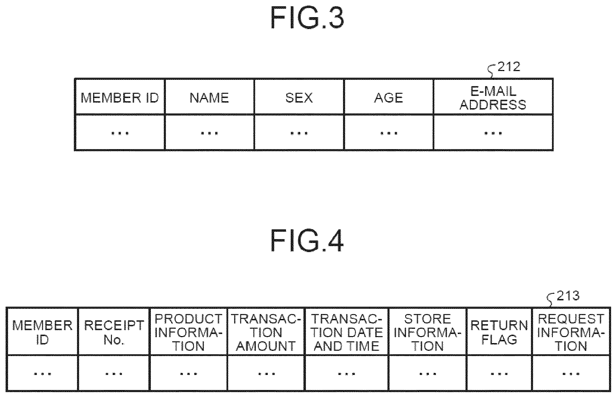

The member master 212 is a master file that stores information on a member of electronic receipt distribution service. FIG. 3 illustrates a data configuration of the member master 212. Each piece of data registered in the member master 212 is associated with each piece of information indicating a member ID, a name, a sex, an age, or an e-mail address. Each piece of information registered in the member master 212 is registered when a customer performs member registration of the electronic receipt distribution service.

In an item of the member ID, a member ID for identifying a member of the electronic receipt distribution service is registered. In an item of the name, information indicating the name of the member is registered. In an item of the sex, information indicating the sex of the member is registered. In an item of the age, information indicating the age of the member is registered. In an item of the e-mail address, the e-mail address of the customer terminal 4 owned by the member is registered.

The receipt information management file 213 manages receipt information of a transaction settled by the settlement device 3 for each transaction. The receipt information management file 213 is registered and updated based on the receipt information received from the settlement device 3. FIG. 4 illustrates a data configuration of the receipt information management file 213. Each piece of data registered in the receipt information management file 213 is associated with each piece of information indicating a member ID, receipt No, product information, a transaction amount, transaction date and time, store information, a return flag, or request information. Although, in the embodiment, the receipt information includes a member ID, receipt No, product information, a transaction amount, transaction date and time, and store information, the receipt information can be optionally set.

In an item of the member ID, a member ID for identifying a member of the electronic receipt distribution service is registered. In an item of the receipt No, receipt No for specifying one transaction of a member in each settlement device 3 is registered. The receipt No is issued by each settlement device 3. The receipt No is one example of the transaction specifying information.

In an item of the product information, information on a product sold in a transaction specified by the receipt No is registered. In an item of the product information, information indicating a product code for specifying a product, the name of the product, a unit price, a tax amount, and the like are registered, and the information can be optionally set. When a plurality of products is purchased in one transaction, product information is registered for each of a plurality of products in the item of the product information. In an item of the transaction amount, information indicating a total amount of one transaction is registered. In an item of the transaction date and time, information indicating the date and time when one transaction is performed is registered.

In an item of the store information, information on a store where a transaction has been performed is registered. The information registered in the item of the store information includes a store code for specifying a store, and a name, a location, and a telephone number of the store, and can be optionally set. For example, register No for specifying the settlement device 3 that has performed settlement processing for a transaction may be included. In an item of the return flag, information indicating whether or not a product has been returned in a transaction specified by the receipt No is registered. In the item of the return flag, "0" is registered when no product is returned in a transaction, and " 1" is registered when a product is returned in the transaction.

In an item of the request information, a request information is registered. The request information is used for the customer terminal 4 to transmit a request for a return receipt to the electronic receipt server 2 at the time when a product is returned in a transaction specified by the receipt No. In the embodiment, the information registered in the item of the request information is a uniform resource locator (URL) of a web page on which target return receipt information is published. The URL of a web page on which target return receipt information is published is link information, and one example of request information. Note that, when the electronic receipt server 2 transmits the return receipt information to the customer terminal 4 without using the web page, an address of a reception destination that receives a request for return receipt information and the like are registered in the item of the request information.

The receipt information registered in the receipt information management file 213 is rewritten in accordance with the return information acquired by the electronic receipt server 2 from the settlement device 3. The rewritten receipt information constitutes the corrected receipt information. Therefore, it can be said that the receipt information management file 213 manages the corrected receipt information.

The return receipt information management file 214 manages the return receipt information indicating information on a returned product. When a product is returned in a settled transaction, the return receipt information is registered in the return receipt information management file 214 based on the return information received from the settlement device 3. The return information includes a product code of a returned product and a return code indicating that the product code is a product code of the returned product. It can be said that the return receipt information is generated by the return information being registered in the return receipt information management file 214. FIG. 4 illustrates a data configuration of the return receipt information management file 214. Each piece of data registered in the return receipt information management file 214 is associated with each piece of information indicating return receipt No, receipt No, product information, a refund amount, return date and time, store information, or request information. Although, in the embodiment, the return receipt information includes return receipt No, receipt No, the product information, the refund amount, the return date and time, and the store information, the return receipt information can be optionally set.

In an item of the return receipt No, return receipt No for specifying a return receipt issued at the time when a product is returned is registered. The settlement device 3 issues the return receipt No each time the settlement device 3 executes return processing. When a plurality of products is returned in one return processing performed by the settlement device 3, one return receipt No is issued.

In the item of the receipt No, the receipt No of a settled transaction in which a product has been returned is registered. In the item of the product information, information on the returned product is registered. In an item of the product information, information indicating a product code for specifying a product, the name of the product, a unit price, a tax amount, and the like are registered, and the information can be optionally set.

In an item of the refund amount, information indicating an amount returned to a customer by the return processing, that is, the total amount of all the returned products is registered. In an item of the return date and time, information indicating the date and time when the settlement device 3 executed the return processing is registered.

In an item of the store information, information on a store in which a product has been returned is registered. The information registered in the item of the store information includes a store code for specifying a store, and a name, a location, and a telephone number of the store, and may include the register No for specifying the settlement device 3 which performed the return processing. In an item of the request information, a URL of a web page on which the return receipt information specified by the return receipt No is published is registered.

Returning to FIG. 2, a hardware configuration of the electronic receipt server 2 will be described.

The display unit 22 includes, for example, a liquid crystal panel, and displays various pieces of information. The display unit 22 displays information stored in the member master 212, the receipt information management file 213, and the return receipt information management file 214, as necessary.

The operation unit 23 is used for inputting information to the control unit 20, and includes a keyboard, a touch panel, and a mouse.

The communication unit 24 is an interface for communicating with an external device such as the settlement device 3 and the customer terminal 4. The control unit 20 can transmit and receive information (data) to and from an external device by being connected to the external device via the communication unit 24.

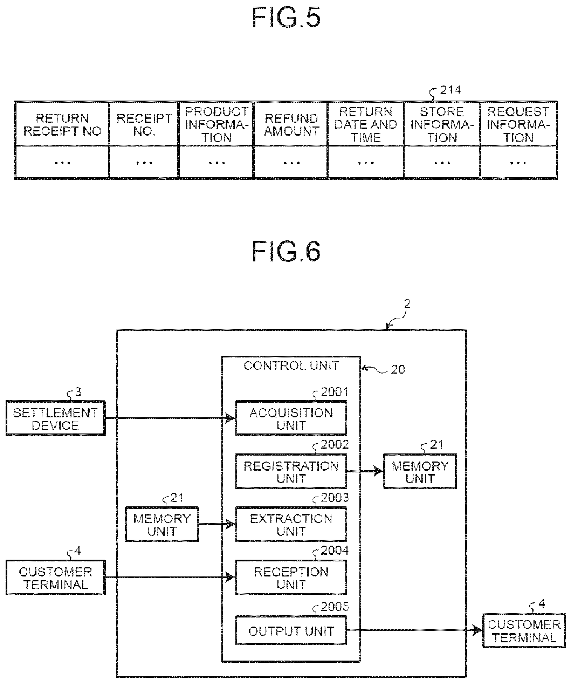

Subsequently, a functional configuration of the control unit 20 of the electronic receipt server 2 will be described. FIG. 6 is a block diagram illustrating a main functional configuration of the control unit 20 of the electronic receipt server 2. The control unit 20 functions as an acquisition unit 2001, a registration unit 2002, an extraction unit 2003, a reception unit 2004, and an output unit 2005 by the CPU 201 operating in accordance with a control program stored in the ROM 202 or the memory unit 21. Note that each of these functions may be configured by hardware such as a dedicated circuit.

The acquisition unit 2001 acquires receipt information from the settlement device 3. The receipt information includes a member ID of a customer who is a member of the electronic receipt service, receipt No, product information on a product for which a transaction has been made, a transaction amount, and store information on a store in which the transaction has been made.

Furthermore, the acquisition unit 2001 acquires transaction specifying information on a transaction in which a product has been returned after settlement processing and return information indicating the product returned in the transaction. Specifically, the acquisition unit 2001 acquires, from the settlement device 3, return information including receipt No of the transaction in which a product has been returned after settlement processing and a product code and a return code indicating that the product code is a return code of the returned product. The acquisition unit 2001 is one example of the return information acquisition unit.

The registration unit 2002 registers the receipt information acquired by the acquisition unit 2001 in the receipt information management file 213.

Furthermore, the registration unit 2002 registers return receipt information indicating information on the returned product based on the return information acquired by the return information acquisition unit. Specifically, the registration unit 2002 registers the return receipt No included in the return information acquired by the acquisition unit 2001, the receipt No of the transaction in which the product has been returned, the product information on the returned product, the refund amount, the return date and time, and the store information in the return receipt information management file 214. Furthermore, the registration unit 2002 registers the URL of the web page on which the return receipt information set by the control unit 20 is published in the return receipt information management file 214. The registration unit 2002 is one example of the return receipt information registration unit.

Moreover, the registration unit 2002 registers the corrected receipt information obtained by correcting the receipt information indicating the information on the transaction before the product is returned based on the transaction specifying information and the return information acquired by the return information acquisition unit. Specifically, the registration unit 2002 refers to the receipt information management file 213, and updates the receipt information corresponding to the receipt No acquired by the acquisition unit 2001 based on the return information. For example, the registration unit 2002 deletes the product information included in the return information from the product information registered in the receipt information management file 213. Furthermore, the registration unit 2002 rewrites the return flag registered in the receipt information management file 213 from "0" to "1", and registers the URL of the web page set in the item of the request information. Note that, when the return flag has already been rewritten to " 1" at the time when the registration unit 2002 updates the receipt information, the registration unit 2002 does not rewrite the return flag. The registration unit 2002 is also one example of the corrected receipt information registration unit. Note that the registration unit 2002 may register the corrected receipt information not by rewriting the receipt information stored in the receipt information management file 213 and registering the corrected receipt information but by separately generating a management file.

When the reception unit 2004 receives a receipt information request from the customer terminal 4, the extraction unit 2003 extracts the receipt information corresponding to the receipt No included in the receipt information request from the receipt information management file 213. Furthermore, when the reception unit 2004 receives a corrected receipt information request from the customer terminal 4, the extraction unit 2003 extracts the receipt information corresponding to the receipt No included in the corrected receipt information request from the receipt information management file 213. The extracted receipt information has been updated by the return information from the settlement device 3, and is corrected receipt information. Moreover, when the reception unit 2004 receives a return receipt information request from the customer terminal 4, the extraction unit 2003 extracts the return receipt information corresponding to the return receipt No included in the return receipt information request from the receipt information management file 213.

The reception unit 2004 receives the receipt information request, the corrected receipt information request, and the return receipt information request from the customer terminal 4.

In response to the various information requests received by the reception unit 2004, the output unit 2005 transmits the receipt information, the corrected receipt information, and the return receipt information in the requested data format to the customer terminal 4. In the embodiment, the output unit 2005 transmits display data generated for displaying the receipt information, the corrected receipt information, and the return receipt information extracted by the extraction unit 2003 on the web page. The mobile terminal 4 displays these various pieces of information with a web browser.

Furthermore, the output unit 2005 outputs the corrected receipt information and the request information for transmitting a request for the return receipt information to the information terminal of the customer in association with each other. Specifically, the output unit 2005 transmits, to the customer terminal 4, the corrected receipt information extracted by the extraction unit 2003 and the URL of the web page corresponding to the corrected receipt information in the receipt information management file 213 in association with each other. For example, the output unit 2005 transmits, to the customer terminal 4, display data for displaying link information of the web page that provides the return receipt information with the link information being embedded in the corrected receipt. Note that the output unit 2005 transmits other various pieces of information to the settlement device 3 and the customer terminal 4, as necessary.

Next, the settlement device 3 will be described. The settlement device 3 includes a POS terminal provided in each store. The type of the POS terminal is not limited. Any of a common POS terminal in which a clerk performs product registration and accounting operation, a self-POS terminal in which a customer performs the product registration and the accounting operation, a semi-self-POS terminal in which a clerk performs the product registration and a customer performs the accounting operation, and the like may be adopted. Furthermore, the settlement device 3 may be a settlement terminal or the like that executes processing related to cashless settlement.

The settlement device 3 executes settlement processing when a customer purchases a product. When reading a member ID of the electronic receipt service, the settlement device 3 transmits receipt information related to a transaction for which the settlement processing has been performed to the electronic receipt server 2. Furthermore, when reading the member ID at the time of return processing, the settlement device 3 transmits return information to the electronic receipt server 2.

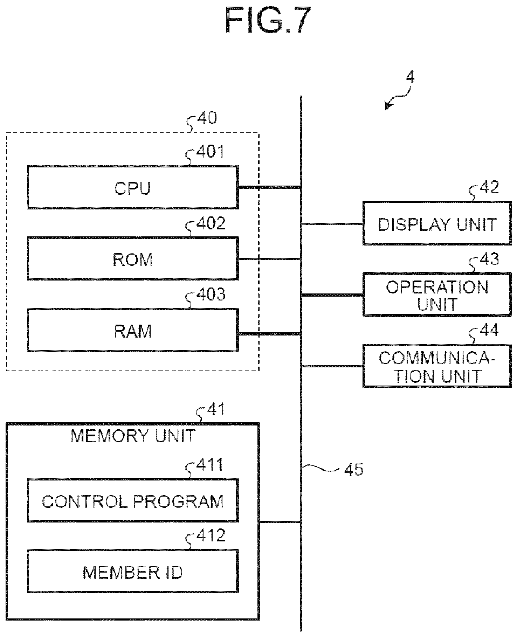

Next, the customer terminal 4 will be described. FIG. 7 is a block diagram illustrating a main hardware configuration of the customer terminal 4. The customer terminal 4 includes a control unit 40, a memory unit 41, a display unit 42, an operation unit 43, and a communication unit 44. The control unit 40, the memory unit 41, the display unit 42, the operation unit 43, and the communication unit 44 are connected to each other via a bus 45 or the like.

The control unit 40 includes a computer including a CPU 401, a ROM 402, and a RAM 403. The CPU 401, the ROM 402, and the RAM 403 are connected to each other via the bus 45.

The CPU 401 controls the overall operation of the customer terminal 4. The ROM 402 stores various programs such as a program used for driving the CPU 401 and various pieces of data. The RAM 403 is used as a work area of the CPU 401, and develops various programs and various pieces of data stored in the ROM 402 and the memory unit 41. The control unit 40 executes various pieces of control processing of the customer terminal 4 by the CPU 401 operating in accordance with a control program, which is stored in the ROM 402 or the memory unit 41 and developed in the RAM 403.

The memory unit 41 includes a storage medium such as an HDD and a flash memory, and maintains stored contents even when power is turned off. The memory unit 41 stores a control program 411 and a member ID 412.

The control program 411 includes an application program for receiving provision of the electronic receipt service, a program for displaying an electronic receipt, a corrected receipt, and a return receipt, and, for example, a program of a web browser and the like for browsing information published on a web.

The member ID is a member ID of the electronic receipt service. The member ID is given when the customer executes member registration of the electronic receipt service.

The display unit 42 includes, for example, a liquid crystal panel, and displays various pieces of information. The display unit 42 displays an electronic receipt, a corrected receipt, a return receipt, and the like based on information received from the electronic receipt server 2.

The operation unit 43 is used for inputting information to the control unit 40, and includes a touch panel provided on the surface of the display unit 42.

The communication unit 44 is an interface for communicating with an external device such as the electronic receipt server 2. The control unit 40 can transmit and receive information (data) to and from an external device by being connected to the external device via the communication unit 44.

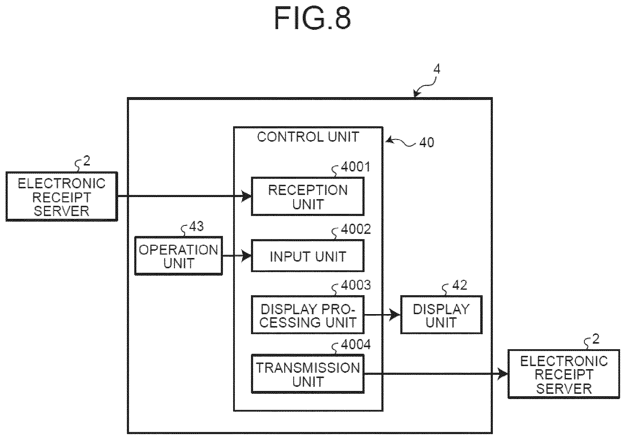

Subsequently, a functional configuration of the control unit 40 of the customer terminal 4 will be described. FIG. 8 is a block diagram illustrating a main functional configuration of the control unit 40 of the customer terminal 4. The control unit 40 functions as a reception unit 4001, an input unit 4002, a display processing unit 4003, and a transmission unit 4004 by the CPU 401 operating in accordance with a control program stored in the ROM 402 and the memory unit 41. Note that each of these functions may be configured by hardware such as a dedicated circuit.

The reception unit 4001 receives various pieces of information from an external device. For example, the reception unit 4001 receives receipt information, corrected receipt information associated with request information, and the return receipt information from the electronic receipt server 2.

Various pieces of information is input from the operation unit 43 to the input unit 4002. For example, an instruction of a receipt information request, an instruction of a corrected receipt information request, and an instruction of a return receipt information request are input to the input unit 4002.

The display processing unit 4003 controls the display unit 42 and causes the display unit 42 to display various pieces of information. For example, the display processing unit 4003 causes the display unit 42 to display an electronic receipt based on the receipt information received from the electronic receipt server 2, and causes the display unit 42 to display a return receipt based on the return receipt information received from the electronic receipt server 2. Furthermore, the display processing unit 4003 causes the display unit 42 to display a corrected receipt based on the corrected receipt information and the request information received from the electronic receipt server 2. Moreover, the display processing unit 4003 causes the display unit 42 to display an operation screen for inputting a receipt information request and a corrected receipt information request when an application program for receiving provision of the electronic receipt service is activated, for example.

The transmission unit 4004 transmits various pieces of information to the electronic receipt server 2. For example, the transmission unit 4004 transmits information, such as a receipt information request, a corrected receipt information request, and a return receipt request, to the electronic receipt server 2. The transmission unit 4004 transmits a member ID together when transmitting these various pieces of information to the electronic receipt server 2. This enables the electronic receipt server 2 to specify a transmission source (member and e-mail address of customer terminal 4 of member) of various pieces of information by referring the member master 212.

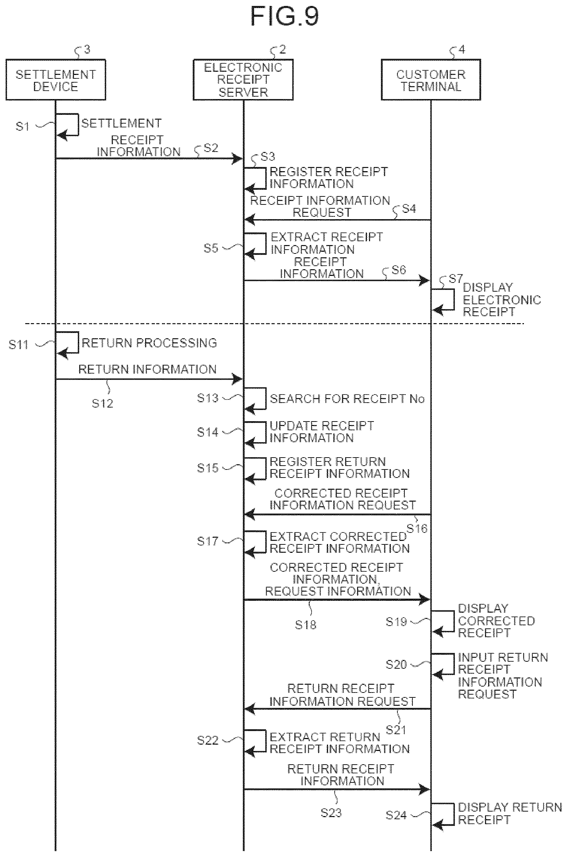

An outline of an operation of the electronic receipt system 1 having the above-described configuration will be described. FIG. 9 is a sequence chart illustrating a flow of the operation of the electronic receipt system 1. Note that the sequence chart illustrates a flow of the operation in a case where a customer purchases a product, settlement of the transaction is completed, and then the product related to the transaction is returned.

First, a flow at the time of transaction settlement will be described. When a member of the electronic receipt service purchases a product in a store, the settlement device 3 of the store executes settlement processing (Step S1). The settlement device 3 transmits receipt information on one transaction for which settlement processing has been performed to the electronic receipt server 2 (Step S2). The receipt information includes a member ID of a customer, issued receipt No, product information (e.g., product code, product name, unit price, and tax amount) on a transaction target product, a transaction amount, transaction date and time, and store information (e.g., store name, store code, TEL, address, and register No).

The electronic receipt server 2 registers the received receipt information in the receipt information management file 213 (Step S3). At this time, "0" is registered in a return flag of the receipt information management file 213, and nothing is registered in the item of the request information.

The customer terminal 4 can transmit a receipt information request to the electronic receipt server 2 after settlement of the settlement device 3 (Step S4). The receipt information request is made by a URL of a web page that provides receipt information to the customer terminal 4 at the time when the electronic receipt server 2 registers the receipt information being transmitted and the customer terminal 4 designating the URL. Note that, in the receipt information request, when the electronic receipt server 2 registers the receipt information, a registration notification including receipt No may be transmitted to the customer terminal 4, and the customer terminal 4 that has received the registration notification may transmit the receipt information request in which the receipt No has been specified to the electronic receipt server 2.

The electronic receipt server 2 extracts the receipt information requested in the receipt information request from the receipt information management file 213 (Step S5). The electronic receipt server 2 generates display data of the extracted receipt information, and transmits the display data to the customer terminal 4 as the receipt information (Step S6).

The customer terminal 4 temporarily stores the received receipt information, in other words, the receipt information (display data) that has been published on a web and downloaded, and displays the electronic receipt on the display unit 42 with a web browser (Step S7). The temporarily stored receipt information is cleared, for example, when an application program of the electronic receipt service is activated next time. Note that the customer terminal 4 may accumulate and store the received receipt information. The corrected receipt information and the return receipt information have mechanisms of a request, reception, storage, and display similar to those of the receipt information.

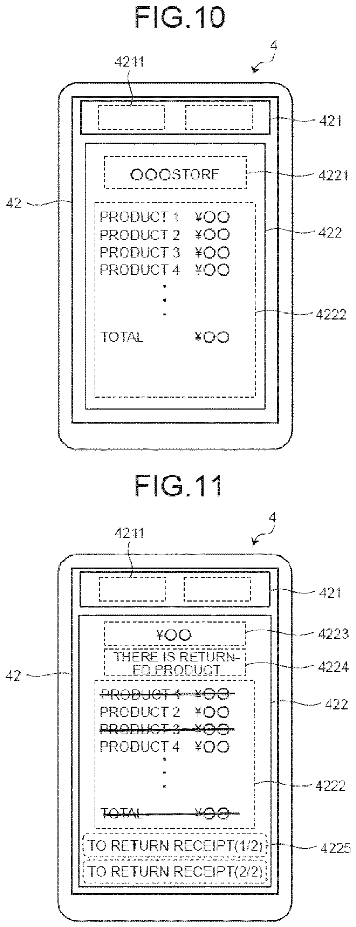

FIG. 10 illustrates a display screen of an electronic receipt. A header unit 421 and a main display unit 422 are formed in the display unit 42 of the customer terminal 4.

A plurality of buttons 4211 is formed in the header unit 421. For example, the buttons 4211 are used for causing the main display unit 422 to display a barcode indicating a member ID, and are used for causing the main display unit 422 to display an electronic receipt.

The main display unit 422 displays an electronic receipt on the electronic receipt display screen. A store information display area 4221 and a transaction information display area 4222 are formed in the main display unit 422. Store information is displayed in the store information display area 4221. Note that a commercial message and the like may be displayed in the store information display area 4221. Product information, transaction date and time, receipt No, and the like are displayed in the transaction information display area 4222. The product information displays a product name and a price for each product in one line. Note that, when a large number of products are purchased in one transaction and product information does not fall within the display unit 42 of the customer terminal 4, the main display unit 422 can display all pieces of information with a function of scrolling a display screen up and down.

The customer can confirm the transaction content by browsing the displayed electronic receipt. Furthermore, when returning a product in a store, the customer can inform a clerk that the customer purchased the product to be returned by presenting an electronic receipt to the clerk.

Returning to FIG. 9, a flow at the time of returning a product will be described. When a product in a settled transaction is returned, the settlement device 3 executes return processing (Step S 11). The return processing is performed for refunding the price of the returned product to the customer, and has been conventionally performed. The settlement device 3 transmits return information to the electronic receipt server 2 (Step S12). The return information includes issued return receipt No, receipt No for specifying a settled transaction in which a product has been returned, product information (e.g., product code, product name, unit price, and tax amount) on the returned product, a refund amount related to the return, return date and time, and store information (e.g., store name, store code, TEL, address, and register No).

The electronic receipt server 2 searches the receipt information management file 213 for the receipt No included in the return information (Step S 13), and updates the receipt information that has been searched for based on the return information (Step S14). In other words, the electronic receipt server 2 registers the corrected receipt information obtained by correction based on the return information. Furthermore, the electronic receipt server 2 registers return receipt information based on the return information (Step S 15). At this time, the URL of the web page on which the return receipt information is published is set and registered in the receipt information management file 213 and the return receipt information management file 214.

The customer terminal 4 can transmit a corrected receipt information request to the electronic receipt server 2 after return processing of the settlement device 3 (Step S16).

The electronic receipt server 2 extracts the corrected receipt information requested in the corrected receipt information request from the receipt information management file 213 (Step S 17), and transmits display data, in which the extracted corrected receipt information is associated with the request information, to the customer terminal 4 (Step S 18). In one example, the request information is the URL of the web page on which the return receipt information is published.

The customer terminal 4 displays a corrected receipt based on the received corrected receipt information and request information (Step S19). The customer terminal 4 displays a corrected receipt including a button for designating the URL of the web page on which the return receipt information is published.

FIG. 11 illustrates a display screen of the corrected receipt. The same reference signs are attached to configurations similar to those in FIG. 10, and description thereof will be omitted.

The main display unit 422 displays a corrected receipt on a corrected receipt display screen. In addition to the transaction information display area 4222, a transaction amount display area 4223, a return transaction display area 4224, and a return receipt display icon 4225 are formed in the main display unit 422. Furthermore, the contents to be corrected among the contents displayed in the transaction information display area 4222, that is, the product information on the returned product and a total amount changed by the return are displayed with, for example, a red cancellation line being drawn on the contents. Note that the corrected contents may be displayed by giving not a cancellation line but some mark.

In the transaction amount display area 4223, a total amount after the product is returned is displayed. The total amount after the product is returned is obtained by subtracting the price of the returned product from the total amount of the transaction before the product is returned. The return transaction display area 4224 is used for displaying information indicating that a product has been returned in a transaction. For example, characters such as "there is returned product" are displayed in the return transaction display area 4224.

The return receipt display icon 4225 functions as an icon for requesting display of a return receipt. The customer can cause the main display unit 422 to display the return receipt by touching the return receipt display icon 4225. When the settlement device 3 performs a plurality of pieces of return processing, return receipt display icons 4225 are formed for respective pieces of return processing. In other words, when a plurality of products is returned in the same transaction, an icon corresponding on a one-to-one basis to the return processing of the settlement device 3 is displayed. When a plurality of return receipt display icons 4225 is formed, the order in which the pieces of return processing were performed is displayed. In the example of FIG. 11, an upper return receipt display icon 4225 is used for displaying a return receipt related to the first return processing, and a lower return receipt display icon 4225 is used for displaying a return receipt related to the second return processing.

The corrected receipt displayed by the main display unit 422 includes the return receipt display icon 4225, and is displayed based on information transmitted from the output unit 2005 of the electronic receipt server 2. In other words, it can be said that the output unit 2005 outputs display data for causing the customer terminal 4 to display the corrected receipt including an icon for requesting display of the return receipt.

The customer can browse a desired return receipt by touching the return receipt display icon 4225. The customer can input a request for displaying a return receipt with a corrected receipt being displayed and the corrected receipt being confirmed, which leads to good operability. Furthermore, when a plurality of pieces of return processing is performed in one transaction, the return receipt display icon 4225 is displayed such that the return receipt display icon 4225 corresponds to each piece of return processing on a one-to-one basis and the order of the pieces of return processing can be grasped. The customer can thus easily browse a desired return receipt.

Returning to FIG. 9, the description will be continued. When the customer touches the return receipt display icon 4225, the URL of the web page on which the return receipt information is published is designated, and a return receipt information request is input to the customer terminal 4 (Step S20). The customer terminal 4 transmits the return receipt information request to the electronic receipt server 2 (Step S21).

The electronic receipt server 2 extracts the return receipt information corresponding to the designated URL (Step S22), and transmits the return receipt information to the customer terminal 4 (Step S23).

The customer terminal 4 displays the return receipt based on the received return receipt information (Step S24).

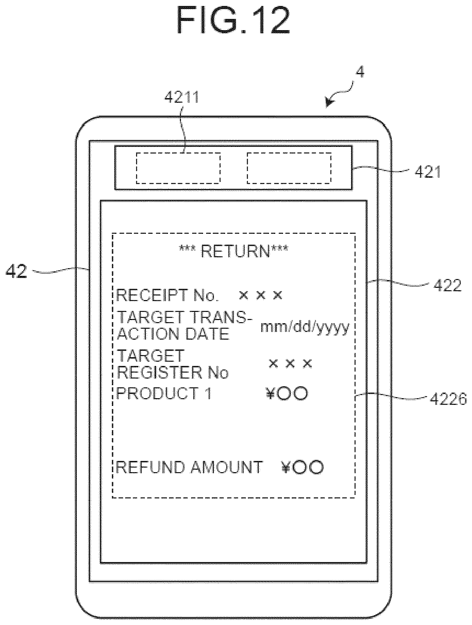

FIG. 12 illustrates a display screen of the return receipt. The same reference signs are attached to configurations similar to those in FIGS. 10 and 11, and description thereof will be omitted.

The main display unit 422 displays the return receipt on the return receipt display screen. The information displayed by the return receipt includes characters of "return" indicating that a return receipt is displayed, information on a transaction (receipt No, transaction date, and target register No) before the product is returned, information on the returned product (product name and price), and a refund amount. Note that the information included in the return receipt is not limited to the above, and can be optionally set.

The above-described operation enables the electronic receipt system 1 to provide an electronic receipt, a corrected receipt, and a return receipt to the customer who is a member of the electronic receipt service.

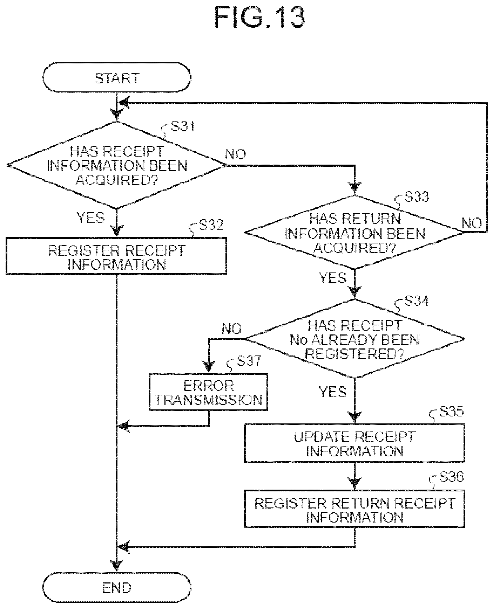

Next, registration processing executed by the electronic receipt server 2 will be described. FIG. 13 is a flowchart illustrating a flow of the registration processing in the control unit 20 of the electronic receipt server 2.

The control unit 20 determines whether or not the acquisition unit 2001 has acquired the receipt information from the settlement device 3 (Step S31). When the acquisition unit 2001 acquires the receipt information from the settlement device 3 (Y in Step S31), the registration unit 2002 registers the receipt information in the receipt information management file 213 (Step S32). Then, the control unit 20 ends the registration processing.

When the acquisition unit 2001 does not acquire the receipt information from the settlement device 3 (N in Step S31), the control unit 20 determines whether or not the acquisition unit 2001 has acquired the return information from the settlement device 3 (Step S33). When the acquisition unit 2001 has not acquired the return information (N in Step S33), the processing returns to Step S31.

When the acquisition unit 2001 acquires the return information from the settlement device 3 (Y in Step S33), the registration unit 2002 determines whether or not the receipt No included in the return information is registered in the receipt information management file 213 (Step S34). In other words, the registration unit 2002 determines whether or not the receipt information of a transaction in which a product has been returned is managed in the receipt information management file 213.

When the receipt No included in the return information is registered in the receipt information management file 213 (Y in Step S34), the registration unit 2002 updates the receipt information of the receipt No based on the return information acquired by the acquisition unit 2001 (Step S35). The corrected receipt information is registered by updating the receipt information. Next, the registration unit 2002 registers the return information acquired by the acquisition unit 2001 in the return receipt information management file 214 (Step S36). Then, the control unit 20 ends the registration processing.

When the receipt No included in the return information acquired by the acquisition unit 2001 is not registered in the receipt information management file 213 in the processing in Step S34 (N in Step S34), the output unit 2005 determines that the receipt information of the transaction in which a product has been returned is not to be managed by the electronic receipt server 2, and performs error transmission to the settlement device 3 (Step S37). Then, the control unit 20 ends the registration processing.

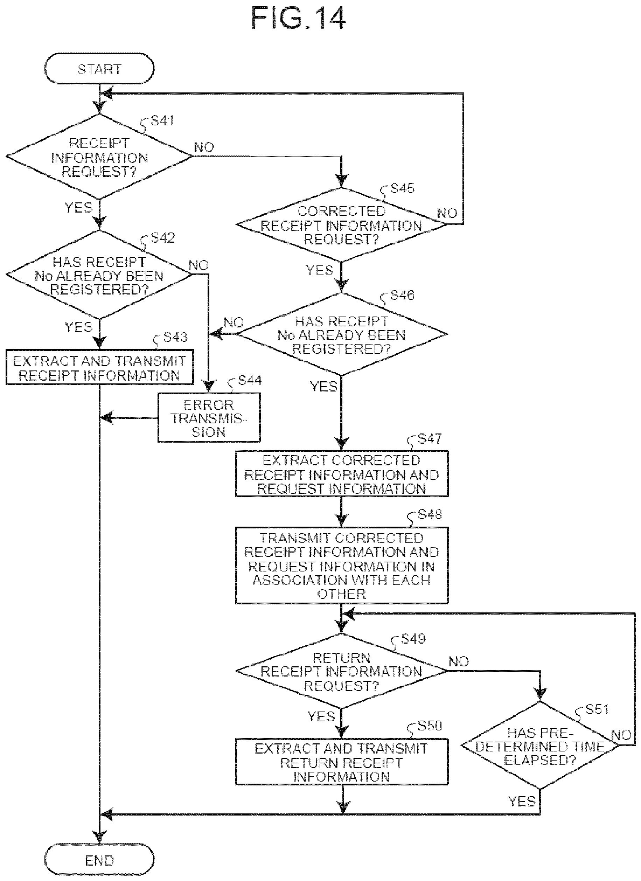

Subsequently, output processing executed by the electronic receipt server 2 will be described. FIG. 14 is a flowchart illustrating a flow of the output processing in the control unit 20 of the electronic receipt server 2.

The control unit 20 determines whether or not the reception unit 2004 has received a receipt information request from the customer terminal 4 (Step S41). When the reception unit 2004 receives the receipt information request (Y in Step S41), the control unit 20 determines whether or not the receipt No included in the receipt information request is registered in the receipt information management file 213 (Step S42).

When the receipt No included in the receipt information request is registered in the receipt information management file 213 (Y in Step S42), the extraction unit 2003 extracts the receipt information of the receipt No, and the output unit 2005 transmits the extracted receipt information to the customer terminal 4 (Step S43). Then, the control unit 20 ends the output processing.

When the receipt No included in the receipt information request is not registered in the receipt information management file 213 (N in Step S42), the output unit 2005 determines that the requested receipt information is not to be managed by the electronic receipt server 2, and performs error transmission to the customer terminal 4 (Step S44). Then, the control unit 20 ends the output processing.

When the reception unit 2004 does not receive the receipt information request in the processing in Step S41 (N in Step S41), the control unit 20 determines whether or not the reception unit 2004 has received the corrected receipt information request from the customer terminal 4 (Step S45). When the reception unit 2004 does not receive the corrected receipt information request (N in Step S45), the control unit 20 returns to the processing in Step S41.

When the reception unit 2004 receives the corrected receipt information request (Y in Step S45), the control unit 20 determines whether or not the receipt No included in the corrected receipt information request is registered in the receipt information management file 213 (Step S46). When the receipt No is not registered (N in Step S46), the processing proceeds to Step S44.

When the receipt No included in the corrected receipt information request received by the reception unit 2004 is registered in the receipt information management file 213 (Y in Step S46), the extraction unit 2003 extracts the receipt information of the receipt No as the corrected receipt information, and extracts the corresponding request information (Step S47). The output unit 2005 transmits the extracted corrected receipt information and request information to the customer terminal 4 in association with each other (Step S48).

Next, the control unit 20 determines whether or not the reception unit 2004 has received a return receipt information request from the customer terminal 4 (Step S49). When the reception unit 2004 receives the return receipt information request (Y in Step S49), the extraction unit 2003 extracts the return receipt information corresponding to the URL designated in the return receipt information request, and the output unit 2005 transmits the extracted return receipt information to the customer terminal 4 (Step S50). Then, the control unit 20 ends the output processing.

When the return receipt information request is not received in the processing in Step S49 (N in Step S49), the control unit 20 determines whether or not a predetermined time has elapsed since the output unit 2005 transmitted the extracted corrected receipt information and request information to the customer terminal 4 in association with each other (Step S51). When the predetermined time has not elapsed (N in Step S51), the control unit 20 returns to the processing in Step S49. When the predetermined time has elapsed (Y in Step S51), the control unit 20 determines that the customer does not desire to browse the return receipt, and ends the output processing.

The electronic receipt server 2 can comprehensively manage the receipt information, the corrected receipt information, and the return receipt information for the transaction of the member of the electronic receipt service by the above-described registration processing. Furthermore, the electronic receipt server 2 can transmit information capable of improving the operability of display of a return receipt in the customer terminal 4 by the above-described output processing.

As described above, the electronic receipt server 2 of the embodiment includes: the acquisition unit 2001 that acquires transaction specifying information on a transaction in which a product has been returned after settlement processing and return information indicating the product that has been returned regarding the transaction; a return receipt information registration unit (registration unit 2002) that registers return receipt information indicating information on the product that has been returned based on return information acquired by the acquisition unit 2001; a corrected receipt information registration unit (registration unit 2002) that registers corrected receipt information obtained by correcting receipt information indicating information on the transaction before the product has been returned based on the transaction specifying information and the return information acquired by the acquisition unit 2001; and an output unit 2005 that outputs the corrected receipt information and request information for transmitting a request for the return receipt information to the customer terminal 4 in association with each other.

This enables the customer terminal 4 to acquire information in which the corrected receipt information and the request information for transmitting a request for the return receipt information are associated with each other. This enables the customer terminal 4 to easily display a corrected receipt including an icon for displaying the return receipt, for example. In other words, the electronic receipt server 2 can improve the operability regarding the display of a return receipt in the customer terminal 4.

Note that, in the above-described embodiment, the control program executed by the electronic receipt server 2, which is a server device, and the customer terminal 4 may be provided by being recorded in a computer-readable recording medium such as a CD-ROM. Furthermore, the control program executed by the electronic receipt server 2 and the customer terminal 4 of the above-described embodiment may be provided by being stored on a computer connected to a network such as the Internet and downloaded via the network. Moreover, the control program may be provided via the network such as the Internet.

Although the embodiment of the present invention has been described above, the embodiment is presented as an example, and is not intended to limit the scope of the invention. The embodiment can be implemented in various other forms, and various omissions, substitutions, and changes can be made without departing from the gist of the invention.

### CITATION LIST

### Patent Literature

Patent Literature 1: JP 2020-17322 A

## Claims

1. A server device comprising:
a return information acquisition unit that acquires transaction specifying information on a transaction in which a product has been returned after settlement processing and return information indicating the product that has been returned regarding the transaction;
a return receipt information registration unit that registers return receipt information indicating information on the product that has been returned based on return information acquired by the return information acquisition unit;
a corrected receipt information registration unit that registers corrected receipt information obtained by correcting receipt information indicating information on the transaction before the product has been returned based on the transaction specifying information and the return information acquired by the return information acquisition unit; and
an output unit that outputs the corrected receipt information and request information to an information terminal of a customer in association with each other, the request information being information for transmitting a request for the return receipt information.

2. The server device according to claim 1,
wherein the output unit transmits link information of a web page that provides the return receipt information as request information.

3. The server device according to claim 1 or 2,
wherein the output unit outputs display data for displaying on the information terminal of the customer a corrected receipt including an icon for requesting display of a return receipt.

4. The server device according to claim 3,
wherein, when the return information acquisition unit acquires a plurality of pieces of return information for same transaction specifying information, the output unit outputs display data for displaying on the information terminal of the customer the icon corresponding to each piece of the return information on a one-to-one basis.

5. The server device according to claim 4,
wherein the output unit outputs display data for displaying an order in which the return information acquisition unit has acquired return information in accordance with the icon.

6. A program for controlling a server device,
the program causing the server device to function as:
a return information acquisition unit that acquires transaction specifying information on a transaction in which a product has been returned after settlement processing and return information indicating the product that has been returned regarding the transaction;
a return receipt information registration unit that registers return receipt information indicating information on the product that has been returned based on return information acquired by the return information acquisition unit;
a corrected receipt information registration unit that registers corrected receipt information obtained by correcting receipt information indicating information on the transaction before the product has been returned based on the transaction specifying information and the return information acquired by the return information acquisition unit; and
an output unit that outputs the corrected receipt information and request information to an information terminal of a customer in association with each other, the request information being information for transmitting a request for the return receipt information.
